# EUROPEAN PATENT APPLICATION

(11) **EP 2 343 909 A1**
(43) Date of publication of application: **13.07.2011**
(21) Application number: 10000106.4
(22) Date of filing: 08.01.2010
(51) Int. Cl.: H04R 5/04, B60R 11/02

(54) **A method for installing a car-kit in a motor vehicle**

(71) Applicant: novero GmbH, 40468 Düsseldorf (DE)
(72) Inventor: Clauberg, Patrick, 44137 Dortmund (DE); Pauls, Michael, 45721 Haltern am See (DE)
(74) Representative: Gesthuysen, von Rohr & Eggert

(57) **Abstract**

The invention relates to a method for installing a car-kit in a motor vehicle (2), wherein the car-kit comprises a centralized or de-centralized data processing unit (5), a number of different passenger communication items (3, 4) wirelessly or by wire connected to the processing unit (5), preferably at least one media device (6) wirelessly or by wire connected to the processing unit (5) and/or an interface and/or a cradle for such a media device (6), and operating software of the processing unit (5). The inventive method is characterized in that the operating software is provided with an installation-test mode which can be specifically selected by the person installing the car-kit, during the installation-test mode the operation software addresses some or each of the communication items (3, 4) with an installation-test signal designed to verify the correct installation of the car-kit with reference to the specific communication item (3, 4), and, optionally, the operation software also addresses the person installing the car-kit by way of a communication item (3, 4) with an installation-test information.

## Description

The invention relates to a method for installing a car-kit in a motor vehicle according to the features of the preamble of claim 1,

The present invention relates to the professional or non-professional (plug & play) installation of a hands-free car-kit in a motor vehicle, and of other telephony or media devices, personal navigation devices or similar installations in a motor vehicle. In summary, the products are referred to in general as a car-kit within the following text. However it is clear that all the other devices are covered by that term, too.

Generally, all kinds of telecommunication and media devices are used in motor vehicles. In particular, in order to participate in wireless telecommunications while driving many drivers have a hands-free car-kit professionally installed in their motor vehicles (US 6,889,065 B2). With the devices getting more and more features (telephony, music playback, navigation, even video games) installation of the device, in general the "car-kit", in a motor vehicle becomes increasingly difficult.

Currently persons installing the car-kits do install the car-kits in a best-effort manner. They will make appropriate settings and try the major use-cases. If, for example, a microphone is improperly positioned or the car- radio-mute signal line is not connected correctly, this can be easily missed during the verification phase. The customer will experience a bad product quality or bring back the device for later correction of the installation. This creates additional efforts for the person installing the car-kit without financial compensation.

With the increasing complexity of the car-kits in motor vehicles installation becomes a complex task. This applies especially to the audio installation which needs to be proven for a couple of different use-cases which might even involve external devices like mobile phones to verify the installation. As a good performance of the audio-system is one of the main reasons to buy (professionally) installed car-devices, the optimal performance should be ensured not only by the device manufacturer but also by the device installer.

For the audio downlink there are many possible configurations of audio sources and car-internal loudspeakers. Those external sources are mobile phones, music payers or USB-sticks which can be connected over various wireless or wired media like Bluetooth or USB.

The car has several loudspeakers (e.g. front-left, rear-left, front-right, rear-right), a car-stereo which might have an auxiliary-in connector and also car-radio-mute connectors which are supposed to mute the car-stereo if a phone call is active or if the car-device plays music from external music sources.

For a proper installation, all of those combinations would need to be checked by the person installing the car-kit. This involves intimate knowledge of possible use-cases, a structured test-approach and also the availability of necessary accessories like mobile phones or high capacity music playback devices.

Some parameters like the audio quality of the speech uplink are not easy for the person installing the car-kit to verify at all. But still, a bad positioning or orientation of the microphone has massive impact on the perceived product quality especially during phone calls and voice-recognition scenarios.

Even with modem wireless communication systems like those on the basis of the Bluetooth specification installations look extremely different in different cars, so that optimization of those parameters is difficult.

In general, as to the installation of a hands-free car-kit in a motor vehicle on the basis of Bluetooth, reference is made to above mentioned US 6,889,065 B2 wherein particularly the specifications of "Bluetooth" are extensively discussed and further sources are cited.

Within the context of the present invention we use a number of definitions.

The term "car-kit" has already been explained as covering all kinds of electronic equipment in a motor vehicle related to telephony, media, personal navigation devices, any kinds of displays, headsets, cell phones etc.

The term "car-kit" within the context of the present invention also covers all passenger communication items. They may be already present in the specific motor vehicle like front and rear loudspeakers, or they may be mechanically and electronically mounted in the motor vehicle in the course of installing the car-kit as an hole. The same holds for other passenger communication items like microphones or already installed devices like a navigation system or a car stereo equipment.

The term "motor vehicle" means any kind of land vehicle, in particular passenger cars, trucks, buses.

The term "data processing unit" means the typical electronic unit or control logic including a central processing unit (CPU), appropriate memory devices as well as all kinds of input/output interfaces. Such data processing unit may be a "centralized" single unit. It may also be "de-centralized" in that it comprises a number of separate units which are connected wirelessly or by wire to cooperate electronically to provide the features of a central data processing unit.

The term "passenger communication item" relates on the one hand to audio communication devices and on the other hand to visual communication devices. Audio communication devices are usually loudspeakers and microphones. Visual communication devices are usually full visual displays (like in a PDA or PND), alphanumerical displays, color-code displays or the like.

A "media device" is any kind of media receiver/transmitter, large capacity music memory device, a navigation system, etc. The present invention includes the situation where such a media device is not actually present but there is a prepared interface (wireless, i,e, Bluetooth, or by wire/socket) and/or a cradle for such a media device as part of the car-kit.

The term "operation software of the processing unit" will normally define a number of different programs cooperating to perform the operation of the processing unit. The operating software my include software controlling the amplification of an audio amplifier or a microphone and all kinds of parameters of the car-kit in total.

The object of the present invention is to abandon the prior art try and error installation-test method by a reproducible, software generated installation-test,

The method according to the present invention that solves above defined problem is defined by the features of the characterizing part of claim 1. Further preferred modifications and improvements of that method are the subject matter of the dependent claims.

The invention is also related to a computer readable medium whose contents are the operation software used in the inventive method for installing a car-kit in a motor vehicle.

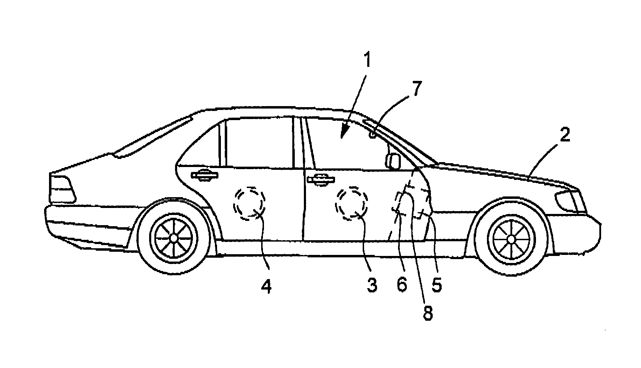

The present invention is hereafter described referring to the drawings. The single figure of the drawings shows a simplified structure of a motor vehicle with some communication items etc.

The inventive method for installing a car-kit in a motor vehicle has an operating software for its processing unit. Such operating software is provided with an installation-test mode. This installation-test mode can be specifically selected by the person installing the car-kit.

The operating software, during the installation-test mode, will address some or each of the communication items. Optionally, also the person installing the car-kit will be addressed with some kind of information by way of a communication item of the car-kit.

The operating software addresses the communication items with an installation-test signal and addresses the person installing the car-kit with an installation test information should that option be provided. Both, the installation-test signal and the installation-test information, are designed to verify the correct installation of the car-kit with reference to a specific communication item.

In a specific embodiment as shown, the first part of the installation-test mode guides the person installing the car-kit through the majority of audio-downlink related use cases.

It allows the person installing the car kit to determine if all audio downlink signals are audible to the user at all and are played through the correct loudspeakers.

An optionally provided second part of the installation-test mode will assist the person installing the car-kit to optimize the orientation of a microphone positioned in the passenger compartment of the motor vehicle. It may be positioned by giving audible or visual feedback of the received signal quality when the person uses the installation in a standard situation like an incoming phone-call.

The important aspect of the present invention is that the installation-test signals are automatically generated by the operating software, preferably stepwise upon confirmation by the person installing the car-kit. So the present invention is not a try and error or best-effort manner but the installation-test mode is in fact operated by the operating software and this is done preferably automatically. However, to give the person installing the car-kit the necessary time to modify the installation repeatedly it is preferable that the operating software guides the person through the installation-test mode stepwise as explained.

In a first version of the present invention the installation-test signal is a specific signal for a specific communication item. With reference to she single figure of the drawings is shall be explained by way of a "best-mode" example.

In the passenger compartment I of the motor vehicle 2 any telephone-related audio signal should be audible in the two front speakers 3 of the passenger compartment 1. Any music related audio signals should be, however, audible in all, here e.g. four, loudspeakers 3, 4. To verify the installation in the installation-test mode the operating software of the processing unit will send different signals, one after the other, to the different speakers 3, 4. The processing unit 5 is here indicated as being part of the multi purpose central unit including navigation, car stereo and all telephone related equipment. At the front of the central equipment with the processing unit 5 a media device 6 is indicated, e,g, a cell phone. At the side of the roof frame of the car 2 a microphone 7 is indicated. Further a visual communication item 8 like a display is indicated, here as part of the central equipment with the processing unit 5,

During the installation-test mode, if the central unit 5 has a visual display, that display can show at the same time where the audio signal is supposed to be audible. In the absence of such a display, the audio-signal itself can give the corresponding installation-test information, e.g, by the computer generated audible term "front-left" or "front-right" or "rear-left" or rear-right" when the corresponding speaker 3, 4 is addressed by the installation-test signal from the processing unit 5.

To verify telephony and music scenario, an implementation could have seven steps:
Instruct the person installing the car-kit to turn on the normal radio to verify that the car-radio-mute function works. Playback a voice signal through
   - front-left speaker,
   - front-right speaker.
Playback a music signal through
   - front-left speaker,
   - front-right speaker,
   - rear-left speaker,
   - rear-right speaker.

Each of the signals can be played until the person installing the car-kit acknowledges the correct functionality.

In a more advanced setup, this test-mode can also be used by the person installing the car-kit to make some audio default settings, like microphone gain and speaker volume which will be used by the device as base-settings.

As a modification to the stepwise procedure mentioned before it is possible that the installation-test signal is a specific signal for a specific group of communication items. This is as possibility e.g, for the two front loudspeakers 3,4 or a group of loudspeakers 3, 4 in the back shelf.

The system explained before was based on a stepwise procedure in that the operation software addresses each communication item with a corresponding installation-test signal sequentially, i.e. one item after the other. Within such stepwise procedure, as explained before, it is possible that within the sequence procedure, as explained before, it is possible that within the sequence the operation software addresses a specific group of communication items simultaneously.

As already explained before it is possible that the passenger communication items 3, 4 are only audio-communication devices and any installation-test information is given as an audible information. Here any kind of confirmation in the stepwise procedure is given by either a spoken installation-test information or at least by way of an acknowledgment signal (a tone or a melody like the acknowledgment signals in mobile phones).

In the present preferred embodiment of the invention the method is performed in a way that the passenger communication items 3, 4 are audio communication devices and at least one visual communication device 8 and any installation-test information is given as an audible information and/or as a visible information. This has been explained before.

Now, in the embodiment of the invention described along with the figure of the drawings there is a microphone 7 in the passenger compartment 1 in order to provide a complete hands-free telephone equipment. Such audio uplink needs specific features for installation.

The quality of the audio uplink can be influenced by the person installing the car-kit when installing the device that incorporates the microphone 7 (be it an internal or an external microphone). This involves the distance to the speaker's mouth, the orientation of the microphone 7 and any obstacles that might be between speaker and microphone 7.

To measure the quality of the audio uplink, the person installing the car-kit needs to generate a voice signal that is similar to normal usage scenario. The car-kit will show or play a prompt with some kind of test-text which the person installing the car-kit is supposed to speak.

The voice of the person installing the car-kit is then recorded by the car-kit and digitally processed e.g, by speech activity detection followed by an audio level calculation in the transmitted audio band. To be independent from the absolute voice loudness of the user, he should be instructed to vary the position and orientation of the microphone 7 during the test to find optimized values.

An assessment of the quality can be given in various ways to the user, including very technical information like numeric signal-noise ratios.

To make this a valuable feature also for non-technical persons, the evaluation should rather be a simple indicator like red, yellow, green lights or e.g. a scale that is shown on the screen from 0 -100 % (all by the visual communication device 8).

As already explained before it is preferred that the audio communication devices 3, 4 are loudspeakers and/or a microphone 7 or microphones in the motor vehicle,

As already explained before it is preferred that the visual communication device 8 is a full visual display, an alphanumerical display and/or a color-code display.

The method according to the invention provides that the installation quality has a professional level secured by the operating software of the processing units 5. So the performance is optimal and not unnecessarily poor due to uneducated installation.

The outcome of the test can even be stored in the device, so the customer can check the outcome of the tests after the installation and has a possibility for quality control of the installation. The result car also be given as input to the vendors customer care organization in case of any complaints about the product quality.

If the feedback to the user is simple enough, those mechanisms can not only be used for professionally installed car-kits but also for plug & play devices where the customer himself would perform the verification procedure.

The person installing the car-kit does not need to use extra devices for installation checking. The person installing the car-kit does not need to be extremely familiar with consumer electronics devices like phones or Bluetooth mp3 Music players.

As a further aspect of the present invention there is provided a computer readable medium carrying an operation software for a processing unit of a car-kit, wherein the operation software is provided with an installation-test mode which can be specifically selected by the person installing the car-kit, during the installation-test mode the operation software addresses some or each of the communication items with an installation-test signal designed to verify the correct installation of the car-kit with reference to the specific communication item, and, optionally, the operation software also addresses the person installing the car-kit by way of a communication item with an installation-test information. Preferred versions of such computer redrum medium are the subject matter of claim 12.

The operating software for a car-kit processing unit is the core of the present invention and is reflecting all the features of the invention as defined before,

## Claims

1. . A method for installing a car-kit in a motor vehicle (2),
wherein the car-kit comprises a centralized or de-centralized data processing unit (5),
a number of different passenger communication items (3, 4) wirelessly or by wire connected to the processing unit (5),
preferably at least one media device (6) wirelessly or by wire connected to the processing unit (5) and/or an interface and/or a cradle for such a media device (6), and
operating software of the processing unit (5),
**characterized in that**
the operating software is provided with an installation-test mode which can be specifically selected by the person installing the car-kit,
during the installation-test mode the operation software addresses some or each of the communication items (3, 4) with an installation-test signal designed to verify the correct installation of the car-kit with reference to the specific communication item (3, 4), and, optionally, the operation software also addresses the person installing the car-kit by way of a communication item (3, 4) with an installation-test information.

2. . Method according to claim 1, **characterized in that**
the installation-test signals are automatically generated by the operating software, preferably stepwise upon confirmation by the person installing the car-kit,

3. . Method according to claim 1 or 2, **characterized in that** the installation-test signal is a specific signal for a specific communication item,

4. . Method according to any one of the preceding claims, **characterized in that** the installation-test signal is a specific signal for a specific group of communication items (3, 4).

5. . Method according to any one of the preceding claims, **characterized in that** the operation software addresses each communication item (3, 4) with a corresponding installation-test signal sequentially, i.e. one item after the other.

6. . Method according to claim 5, **characterized in that**
within the sequence the operation software addresses a specific group of communication items (3, 4) simultaneously.

7. . Method according to any one of the preceding claims, **characterized in that** the passenger communication items (3, 4) are only audio-communication devices and any installation-test information is given as an audible information.

8. . Method according to any one of the claims 1 to 6, **characterized in that** the passenger communication items (3, 4) are audio communication devices and at least one visual communication device and any installation-test information is given as an audible information and/or as a visible information.

9. . Method according to claim 7 or 8, **characterized in that** the audio communication devices are loudspeakers (3, 4) and/or a microphone (7) or microphones in the motor vehicle (2).

10. . Method according to any one of claims 7 to 9, **characterized in that** a visual communication device (8) is a full visual display, an alphanumerical display and/or a color-code display.

11. . A computer readable medium carrying an operation software for a processing unit (5) of a car-kit,
wherein the operation software is provided with an installation-test mode which can be specifically selected by the person installing the car-kit,
during the installation-test mode the operation software addresses some or each of the communication items (3, 4) with an installation-test signal designed to verify the correct installation of the car-kit with reference to the specific communication item (3, 4), and optionally, the operation software also addresses the person installing the car-kit by way of a communication item (3, 4) with an installation-test information.

12. . A computer readable medium according to claim 11,
wherein the operating software is further defined by the features of the characterizing part or characterizing parts of one ore more of the claims 2 to 8,
